Europäisches Patentamt

(19) European Patent Office

Office européen des brevets

(11) Publication number: **0 118 929
B1**

(12) **EUROPEAN PATENT SPECIFICATION**

(45) Date of publication of the patent specification:
27.08.86

(21) Application number: **84200056.4**

(22) Date of filing: **17.01.84**

(51) Int. Cl.⁴: **B 65 G 53/36**

(54) **Process for transporting particulate material.**

(30) Priority: **14.02.83 NL 8300554
04.08.83 DE 3328233**

(43) Date of publication of application:
**19.09.84 Bulletin 84/38**

(45) Publication of the grant of the patent:
**27.08.86 Bulletin 86/35**

(84) Designated Contracting States:
**DE GB NL**

(56) References cited:
**AT - B - 99 747
DE - C - 326 803
DE - C - 729 531**

(73) Proprietor: **SHELL INTERNATIONALE RESEARCH
MAATSCHAPPIJ B.V., Carel van Bylandtlaan 30,
NL-2596 HR Den Haag (NL)**

(72) Inventor: **van der Burgt, Maarten Johannes, Carel van
Bylandtlaan 30, NL-2596 HR The Hague (NL)**
Inventor: **Eckstein, Günter Klaus, Überseering 35,
Hamburg (DE)**

(74) Representative: **Aalbers, Onno et al, P.O. Box 302,
NL-2501 CH The Hague (NL)**

ACTORUM AG

## Description

The invention relates to a process for continuously transporting particulate material from a low pressure zone to an elevated pressure zone, wherein the material is passed from the low pressure zone to the top of the first one of a series of at least two vertical oblong vessels. Such a process is known from German Patent specification DE-C-729 531.

However, this known process operates compression of air and is not suitable for transport of material as a moving bed in a number of long vertical vessels arranged in series.

The present invention is characterized in that

1) the material is passed as a moving bed from the top of each vessel to the bottom thereof by gravity;

2) the material is transported from the bottom of each vessel to the top of the subsequent vessel;

3) the gas pressure at the top of the first vessel is kept relatively low, while the gas pressure at the top of each successive vessel is kept substantially equal to the gas pressure prevailing at the bottom of the preceding vessel;

4) at the bottom of each vessel a gas pressure is applied higher than the gas pressure at the top of that vessel, such that the pressure difference between the bottom and the top of the considered vessel is too small to cause fluidization of the material;

5) the high gas pressure is applied at the bottom of the last vessel; and

6) the material at the bottom of the last vessel is discharged to the elevated pressure zone.

Generally it can be said that the transport of particulate material from a relatively low pressure zone to a relatively high pressure zone is usually done by means of a lock hopper system. By opening a first valve the material is transferred from a storage vessel to a lock hopper. The valve is closed and the lock hopper is brought to an elevated gas pressure. A second valve, connecting the lock hopper to a vessel at elevated pressure, is then opened and the material is fed into this latter vessel and from there to the elevated pressure zone. The second valve is then closed and the gas pressure in the lock hopper is reduced. Opening the first valve marks the beginning of a new cycle.

This process is discontinuous. Moreover, the valves connecting the vessels become badly worn by the abrasive effect of the material in combination with the frequent opening and closing. This necessitates regular replacement of these valves.

The process according to the invention has the advantage that it is continuous and no valves are used which would be subjected to abrasion by the material. In the process according to the invention the gas pressure is built up stagewise in a number of vessels arranged in series. The gas pressure applied at the bottom of each vessel is such that the pressure difference between the bottom and the top is too small to cause fluidization. This ensures that no gas, or almost no gas, escapes from the top of the vessel, which means that no gas, or almost no gas, needs to be supplied to the bottom of the vessels in order to maintain the higher gas pressure. The stagewise pressure build-up according to the invention enables relatively large pressure differences to be overcome with relatively low vessels.

The material can be transported to the top of each of the vessels either pneumatically or mechanically. If it is transported pneumatically to a vessel by a carrier gas, this carrier gas must flow continuously to each vessel, which entails a high gas consumption. The carrier gas has to be separated in the vessel from the material. This can be done by means of, for example, a cyclone or a filter. These problems are not present with mechanical transport. It is therefore preferable to transport the material mechanically to each of the vessels. A variety of mechanical devices can be used, such as screw conveyors, vibration conveyors or elevators. Preferably, the material is transported to the first vessel by means of an elevator.

As regards the transport of the material to each of the subsequent vessels, consideration should be given to a regular discharge from the bottom of the preceding vessel. Discharge can be regulated by means of a star valve or by a screw conveyor. Preferably, the material is discharged from the bottom of a vessel by a screw conveyor which transports the material to an elevator which in turn carries it to the top of the next vessel. It is therefore advantageous to transport the material from the bottom of each vessel to the top of the next one by means of a screw conveyor and an elevator.

The discharge from the last vessel is done mechanically or pneumatically. Which is preferable depends on the purpose for which the material is being transported to the high pressure zone. Coal powder is preferably carried to a high-pressure gasifier by means of an inert carrier gas. In this case it is preferable to transport the coal powder pneumatically from the last vessel to the gasifier. There are therefore cases in which it is preferable to discharge the material pneumatically from the bottom of the last vessel.

During the transport of the material from the top to the bottom the material particles in each of the vessels can adhere to one another and cause bridging so that the transport becomes irregular or even stops altogether. This is particularly likely to happen with fine cohesive substances. For this reason the material in each vessel is preferably subjected to vibration. To this end, one or more vibrators can be installed in each vessel, preferably in the side wall. The vibrators can operate continuously or intermittently. Bridging can also be prevented by keeping the material in motion in other ways, for example by means of a stirring installation or gas injection.

Due to the fact that the gas pressure at the bottom of each vessel is higher than at the top of the vessel, the gas tends to flow from the bottom to the top. This is opposed by the downward flowing material particles. It is preferable to carry out the process according to the invention such that the gas pressure at the bottom of each vessel is maintained without gas escaping from the and without gas being entrained with the material particles. If gas is entrained with the material, it ends up at the bottom of the last vessel and is carried away with the material to the high-pressure zone. This may sometimes be undesirable. The material is therefore preferably passed to the bottom of each vessel at such a velocity that the velocity with which the material passes a certain horizontal cross-section of the vessel is equal to the upward velocity of the gas relative to the material at that cross-section. The gas velocity is influenced by the pressure difference over the material bed and the height of the bed. Care is preferably taken, therefore, by maintaining the correct rate of material supply with the aid of, for example, the elevator, to ensure that the bed height of the material does not fall.

To secure the pressure build-up, the gas pressure in each vessel can be advantageously regulated with the aid of a common pressurized gas system. To this end the vessels are each connected to a pressurized gas line. Reducing valves enable gas at the correct pressure to be introduced into each vessel if the pressure in the vessel falls too low. In addition, each vessel has a gas outlet via which gas is discharged to, for example, a gas re-processing plant if the pressure in the vessel becomes too high. Preferably, the gas lines are laid near the top of each vessel above the material bed, since gas lines located here, not being in contact with solid material, will not become polluted with solid material, even without special precautions, such as filters. It is also possible to connect just the top of the last vessel to a pressurized gas line and to connect the other vessels to one another at their tops by means of lines containing reducing valves. If the gas pressure at the top of a vessel becomes too high, gas can be led via a line and a reducing valve to the previous vessel. If the gas pressure at the top of a vessel becomes too low, gas is fed via another line with reducing valve from the next vessel.

If the material at the bottom of the last vessel is discharged by a carrier gas, a similar gas can be used in the pressurized gas system. Incidentally, only a small quantity of gas will be consumed if the installation works normally, since according to the invention practically no gas escapes from the top of each vessel.

Although the process according to the invention can be used for transporting material from a zone at any low pressure, the low pressure will generally be atmospheric. Material with a wide particle size distribution can be used in the present process. The mean particle size is not critical either. Preferably, the material has a mean particle size of 0.005 to 1.0 mm and a particle size distribution of 0.001 to 3.0 mm.

An important field of application of the present invention is high pressure gasification of a solid fuel such as coal, brown coal, peat, wood, etc. Preferably, the process is applied when the material is a solid fuel and the fuel is transported at a pressure of 3,5 to 50 bar from the last vessel to a gasification reactor where it is advantageously gasified at a pressure of 3 to 40 bar with the aid of an oxygen-containing gas and/or steam to synthesis gas containing mainly carbon monoxide and hydrogen. The fuel can be transported to the reactor pneumatically, e.g. by an inert gas such as nitrogen, carbon dioxide or purified synthesis gas acting as carrier gas. A gas of this sort can also be used in the pressurized gas system, if present.

If the process according to the invention is used with the gasification of a fuel, air must be prevented from being carried along with the fuel from the last vessel to the gasification reactor. This can be done by bringing the fuel from a bunker with an inert gas atmosphere. Alternatively, the gas pressure at the bottom of the first vessel can be made so high by an inert gas that no air flows downwards and so all the air around the fuel is displaced by inert gas.

In the process for transporting fuel to a high-pressure gasification reactor use is preferably made of 2 to 9 vessels. At the bottom of each vessel a gas pressure is advantageously applied which is 2 to 6 bar higher than the gas pressure at the top of that vessel. The height of the vessels is preferably between 30 and 100 m.

In an adavantageous embodiment of the invention the material is transported from the bottom of each vessel to the top of the subsequent vessel pneumatically by means of a carrier gas; the carrier gas is separated from the material at the top of each vessel; and the carrier gas separated from the top of a vessel is recycled to the bottom of an earlier vessel than the immediately preceding vessel in the series.

The material is transported to the top of each of the vessels pneumatically by means of a carrier gas, preferably of an inert nature such as $N_2$ or $CO_2$. If particulate coal has to be pressurized in order to intoduce it into a gasification reactor clean synthesis gas may be used as a carrier gas. This carrier gas flows continuously from an outlet for the particulate material at the bottom of each vessel to the top of the following vessel, which could entail a high gas consumption. The carrier gas is separated at the top of the vessel from the material. This can be done by any suitable means, preferably by means of a cyclone and/or a filter. If the separated carrier gas is vented directly into the atmosphere the volume of spent carrier gas is very great, hence the compression costs are high. Therefore separated carrier gas should be recycled as far possible. If carrier gas, separated at the top of a vessel A is recycled to the bottom of the vessel B, directly preceding vessel A, the carrier gas has to be compressed again because the pressure at the bottom of vessel B is somewhat higher than that at the top of the subsequent vessel A. In order to save compression costs the carrier gas, separated at the top of a vessel A is not recycled to the bottom of a vessel B, but to the bottom of a vessel C, which preceeds vessel B. The pressure at the bottom of vessel C is lower than that at the top of vessel A. Therefore, according to the present invention, the carrier gas separated from the top of a vessel is recycled to the bottom of an earlier vessel than the immediately preceding vessel in the series.

Preferably carrier gas from the top(s) of one or more vessels is recycled to the bottom of the penultimate preceding vessel or the respective penultimate preceding vessels in the series.

As regards the transport of the material to each of the subsequent vessels, consideration should be given to a regular discharge from the bottom of the preceding vessel. Discharge can be regulated by means of a star valve or by a screw conveyor.

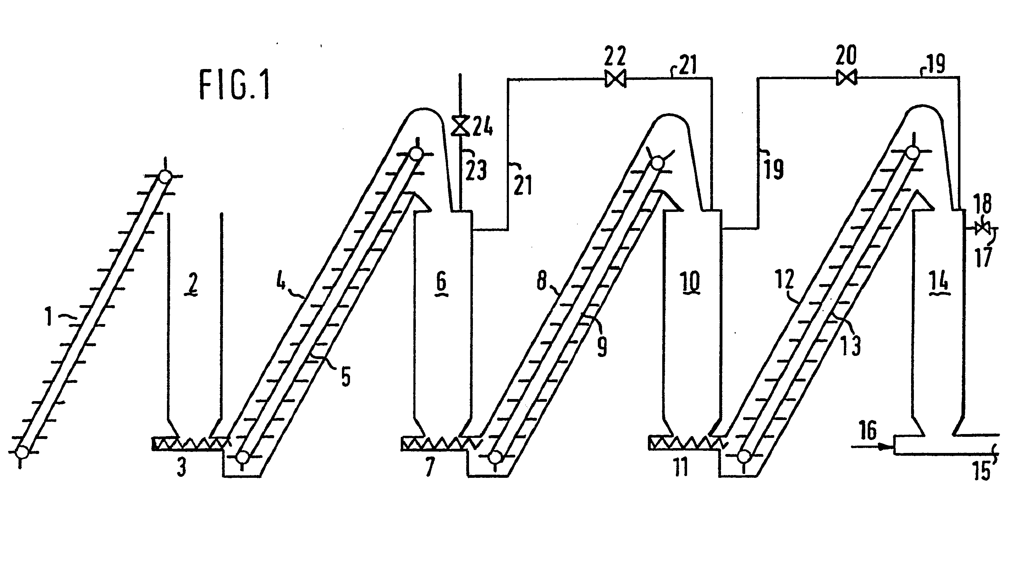

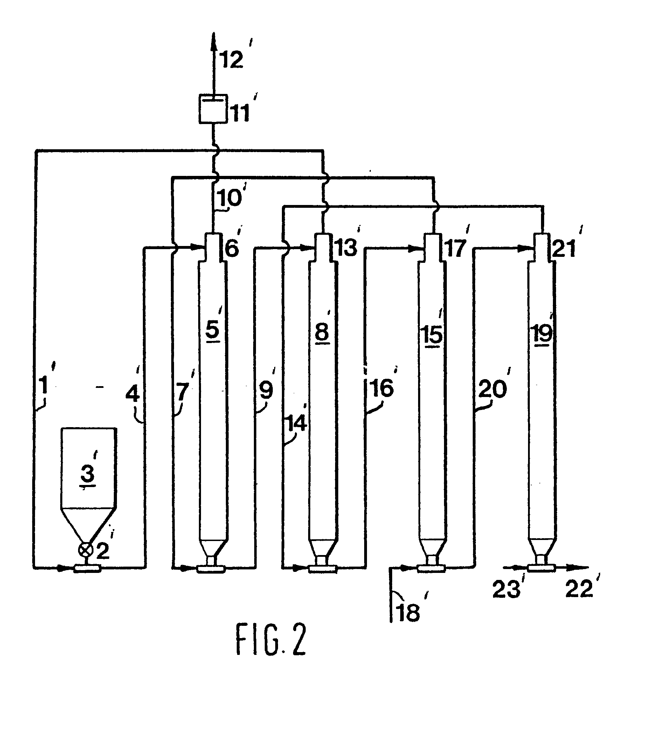

The invention will now be explained in greater detail with reference to the schematic figures 1 and 2, to which the invention, by no means is limited.

Ancillary apparatus, such as valves, compressors and pumps, is in general not shown in the figures.

According to figure 1 an elevator 1 transports a particulate material continuously to the top a vessel 2. The material flows as a moving bed to the bottom, from which it is transported by a screw conveyor 3 to an elevator 5. The elevator 5 is housed in a closed pipe 4 which connects the vessel 2 gas-tightly to a vessel 6. The material fed by the elevator 5 to the top of the vessel 6 passes down to the bottom of the vessel 6. From there a screw conveyor 7 transports the material to an elevator 9. The elevator 9 is surrounded by a pipe 8 which connects the vessel 6 gastightly to a vessel 10. In the same way as in vessels 2 and 6 the material in the vessel 10, brought by the elevator 9, is passed to a screw conveyor 11 in the bottom and from there to an elevator 13. By means of the elevator 13 which is surrounded by a pipe 12 which connects the vessel 10 gas-tightly to a vessel 14, the material is transported to the top of the vessel 14. It is passed down and at the bottom it is discharged pneumatically via a pipe 15. The carrier gas for the pneumatic transport comes via a line 16.

The pressure build-up is achieved and regulated with the aid of a compressed gas system. The carrier gas, coming via the line 16, is at the desired elevated pressure. Via a line 17 and possibly a reducing valve 18 a pressure is applied to the top of vessel 14 such that the pressure difference between the top and bottom of vessel 14 is smaller than the pseudo-hydrostatic pressure of the solid material in the vessel 14. By an appropriate choice of the downward velocity of the material it can be ensured that almost no gas flows from the bottom to the top.

Since the top of the vessel 14 is connected gastightly by the pipe 12 to the bottom of vessel 10, the pressure prevailing there is also almost the same as at the top of vessel 14. The tops of the vessels 10 and 14 are connected to each other by a gas line 19. A reducing valve 20 in the line 19 is adjusted such that the difference between the pressure at the bottom and the pressure at the top is less than the pseudo-hydrostatic pressure of the material in the vessel 10. Functioning similarly to the line 19 is a line 21 with a reducing valve 22 between the tops of vessels 6 and 10. The pressure at the bottom of the vessel 6 ist almost the same as that at the top of the vessel 10 on account of the gas-tight connection by the pipe 8. Similarly, the pressure at the bottom of vessel 2 is almost the same as that at the top of the vessel 6.

The pressure build-up is regulated with the aid of this pressurized gas system. If the pressure at the top of one of the vessels becomes too high, the pressure is vented to the set value via the line connecting the vessel with the preceding one. If this happens in vessel 6 the excess gas is discharged to a gas reprocessing plant (not shown in the figure). If the pressure at the top of a vessel becomes too low, gas at a higher pressure is supplied via the line connecting the vessel in question to the top of the one until the pressure in the vessel has reached the correct value.

According to figure 2 pressurized gas supplied through a line 1' transports a particulate material which is supplied via a rotary gas-lock feeder 2' continuously from a storage vessel 3' via a riser 4' to the top of a vessel 5'. The material is first separated from the gas in a cyclone separator 6' and flows then as a moving bed to the bottom of the vessel 5', from which it is transported by a gas supplied through a line 7' to a vessel 8' via a riser 9'. The gas, separated from the material in the cyclone separator 6', is vented via a line 10', a filter 11' and a line 12'. The material which has been pneumatically supplied to the top of the vessel 8' is separated from the conveying gas in a cyclone separator 13'. The separated gas is recycled via the line 1' to the connection of the riser 4' with the rotary gas-lock feeder 2'. The separated material flows as a moving bed to the bottom of the vessel 8', from which it is transported by a conveying gas supplied through a line 14' to the of a vessel 15' via a riser 16'.

At the top of the vessel 15' the material is separated from the conveying gas in a cyclone separator 17'. The separated conveying gas is recycled from the cyclone separator 17' via the line 7' to the outlet at the bottom of the vessel 5'. The separated material flows as a moving bed to the bottom of the vessel 15', from which it is transported by a fresh high pressure conveying gas, supplied through a line 18', to the top of an ultimate vessel 19' via a riser 20'. The conveying gas is separated from the material in a cyclone separator 21' at the top of the vessel 19', and recycled via the line 14' to the outlet at the bottom of the vessel 8'. The separated material flows down as a moving bed from the top to the bottom of the vessel 19' and at the bottom it is discharged pneumatically via a pipe 22'. The carrier gas for the pneumatic comes via a line 23'.

The pressure build-up is achieved and regulated with the aid of compressed gas system. The carrier gas, coming via the line 23', is at the desired elevated pressure. Via the line 20' and possibly a reducing valve a pressure is applied to the top of vessel 19' such that the pressure difference between the top and bottom of vessel 19' is smaller than the pseudo-hydrostatic pressure of the solid material in the vessel 19'. By an appropriate choice of the downward velocity of the material it can be ensured that almost no gas flows from the bottom to the top.

Since the top of the vessel 19' is connected gastightly by the pipe 14' to the bottom of vessel 8', the pressure prevailing there is slightly lower than the pressure at the top of vessel 19'. The pressure at the bottom of the vessel 5' is slightly lower than the pressure at the top of the vessel 15' on account of the gas-tight connection by the pipe 7'. Similarly, the pressure at the bottom of vessel 3' is almost the same as that at the top of the vessel 8'.

The pressure build-up is regulated with the aid of this pressurized gas system. If the pressure at the top of one of the vessels becomes too high, the pressure is vented to the set value via the line connecting the vessel with the penultimate preceding one. If this happens in vessel 5', the excess gas is discharged to a gas reprocessing plant (not shown in the figure). If the pressure at the top of a vessel becomes too low, gas at a higher pressure is supplied via the line connecting the vessel in question to the top of the vessel following the next one until the pressure in the vessel has reached the correct value.

*Example 1*

In an installation, basically as described in the figure 1, 10,000 kg/h of coal powder in a series of 4 vessels was brought to a pressure of 21 bar. The vessels were 85 m high and had a diameter of 0.56 m. Coal powder was added continuously via the elevators at a sufficient rate to maintain the height of the coal powder beds at 78.4 m. The velocity at which the coal powder was carried downwards amounted to 1.81 m/s. The pressure at the bottoms of vessels 2, 6, 10 and 14 was 6, 11, 16 and 21 bar respectively.

*Example 2*

In an installation, basically as described in the figure 2, 10,000 kg/h of coal powder in a series of 4 vessels was brought to a pressure of 21 bar. The vessels were 85 m high and had a diameter of 0.56 m. Coal powder was added continuously via the pneumatic risers at a sufficient rate to maintain the height of the coal powder beds at 78.4 m. The velocity at which the coal powder was carried downwards amounted to 1.81 m/s. The pressure at the bottoms of vessels 5', 8', 15' and 19' was 6, 11, 16 and 21 bar respectively. The gas velocity in the risers was 0.1 m³/sec (calculated at normal temperature and pressure). Via the line 12 0.1 m³/sec (N.T.P.) was vented to the atmosphere.

## Claims

1. A process for continuously transporting particulate material from a low pressure zone to an elevated pressure zone, wherein the material is passed from the low pressure zone to the top of the first one of a series of at least two vertical oblong vessels, characterized in that:
1) the material is passed as a moving bed from the top of each vessel to the bottom thereof by gravity;
2) the material is transported from the bottom of each vessel to the top of the subsequent vessel;
3) the gas pressure at the top of the first vessel is kept relatively low, while the gas pressure at the top of each successive vessel is kept substantially equal to the gas pressure prevailing at the bottom of the preceding vessel;
4) at the bottom of each vessel a gas pressure is applied higher than the gas pressure at the top of that vessel, such that the pressure difference between the bottom and the top of the considered vessel is too small to cause fluidization of the material;
5) the high gas pressure is applied at the bottom of the last vessel; and
6) the material at the bottom of the last vessel is discharged to the elevated pressure zone.

2. The process as claimed in claim 1, characterized in that the material is discharged pneumatically from the bottom of the last vessel.

3. The process as claimed in claims 1 or 2, characterized in that the material in each vessel is subjected to vibration.

4. The process as claimed in one or more of the preceding claims, characterized in that the material is passed to the bottom of each vessel at such a velocity that the velocity with which the material passes a certain horizontal cross-section of the vessel is equal to the upward velocity of the gas relative to the material at that cross-section.

5. The process as claimed in one or more of the preceding claims, characterized in that the gas pressure in each vessel is regulated with the aid of a common pressurized gas system.

6. The process as claimed in one or more of the preceding claims, characterized in that the gas pressure at the top of the first vessel is atmospheric.

7. The process as claimed in one or more of the preceding claims, characterized in that the material has a mean particle size of 0.005 to 1.0 mm.

8. The process as claimed in one or more of the preceding claims, characterized in that the material is a solid fuel.

9. The process as claimed in claim 8, characterized in that the fuel is transported at a pressure of 3.5 to 50 bar from the last vessel to a gasification reactor.

10. The process as claimed in claim 8 or 9, characterized in that use is made of 2 to 9 vessels.

11. The process as claimed in one or more of claims 8-10, characterized in that at the bottom of each vessel a gas pressure is applied which is 2 to 6 bar higher than the gas pressure at the top of that vessel.

12. The process as claimed in claim 1, characterized in that the material is transported to the first vessel by means of an elevator.

13. The process as claimed in claim 1 or 12, characterized in that the material is transported from the bottom of each vessel to the top of the next one by means of a screw conveyor and an elevator.

14. The process as claimed in anyone of claims 1-11, characterized in that:
the material is transported from the bottom of each vessel to the top of the subsequent vessel pneumatically by means of a carrier gas;
the carrier gas is separated from the material at the top of each vessel; and
the carrier gas separated from the top of a vessel is recycled to the bottom of an earlier vessel than the immediately preceding vessel in the series.

15. The process as claimed in claim 14, characterized in that the carrier gas separated from the top of at least one vessel is recycled to the bottom of the penultimate preceding vessel(s) in the series.

16. The process as claimed in claim 14 or 15, characterized in that the carrier gas is separated from the material at the top of each vessel by means of a filter and/or a cyclone.

## Patentansprüche

1. Verfahren zum kontinuierlichen Transportieren von teilchenförmigem Material von einer Niederdruckzone zu einer Zone höheren Drucks, wobei das Material von der Niederdruckzone zum Oberende des ersten einer Reihe von wenigstens zwei senkrechten langgestreckten Behältern gebracht wird, dadurch gekennzeichnet, dass

1) das Material als ein sich bewegendes Bett vom Oberende jedes Behälters zu dessen Boden durch Schwerkraft gebracht wird;

2) das Material von dem Boden jedes Behälters zum Oberende des nachfolgenden Behälters transportiert wird;

3) der Gasdruck am Oberende des ersten Behälters relativ niedrig gehalten wird, während der Gasdruck am Oberende jedes nachfolgenden Behälters auf einem Wert gehalten wird, der im wesentlichen gleich dem Wert des Gasdruckes ist, der am Boden des vorangehenden Behälters herrscht;

4) am Boden jedes Behälters ein Gasdruck angelegt wird, der höher als der Gasdruck am Oberende dieses Behälters ist, derart, dass der Druckunterschied zwischen dem Boden und dem Oberende des betrachteten Behälters zu gering ist, um eine Fluidisierung des Materials hervorzurufen;

5) der hohe Gasdruck am Boden des letzten Behälters angelegt wird; und

6) das Material am Bodens des letzten Behälters in die Zone höheren Drucks abgegeben wird.

2. Verfahren nach Anspruch 1, dadurch gekennzeichnet, dass das Material vom Boden des letzten Behälters pneumatisch abgegeben wird.

3. Verfahren nach den Ansprüchen 1 oder 2, dadurch gekennzeichnet, dass das Material in jedem Behälter einer Vibration unterworfen wird.

4. Verfahren nach einem oder mehreren der vorhergehenden Ansprüche, dadurch gekennzeichnet, dass das Material zum Boden jedes Behälters mit einer solchen Geschwindigkeit gebracht wird, dass die Geschwindigkeit, mit welcher das Material an einem gewissen waagrechten Querschnitt des Behälters hindurchgeht, gleich der Aufwärtsgeschwindigkeit des Gases relativ zu dem Material an diesem Querschnitt ist.

5. Verfahren nach einem oder mehreren der vorhergehenden Ansprüche, dadurch gekennzeichnet, dass der Gasdruck in jedem Behälter mit Hilfe eines gemeinsamen Druckgassystems geregelt wird.

6. Verfahren nach einem oder mehreren der vorhergehenden Ansprüche, dadurch gekennzeichnet, dass der Gasdruck am Oberende des ersten Behälters Atmosphärendruck ist.

7. Verfahren nach einem oder mehreren der vorhergehenden Ansprüche, dadurch gekennzeichnet, dass das Material eine mittlere Teilchengrösse von 0,005 bis 1,0 mm hat.

8. Verfahren nach einem oder mehreren der vorhergehenden Ansprüche, dadurch gekennzeichnet, dass das Material ein fester Brennstoff ist.

9. Verfahren nach Anspruch 8, dadurch gekennzeichnet, dass der Brennstoff unter einem Druck von 3,5 bis 50 bar von dem letzten Behälter zu einem Vergasungsreaktor transportiert wird.

10. Verfahren nach Anspruch 8 oder 9, dadurch gekennzeichnet, dass 2 bis 9 Behälter verwendet werden.

11. Verfahren nach einem oder mehreren der Ansprüche 8 bis 10, dadurch gekennzeichnet, dass am Boden jedes Behälters ein Gasdruck angelegt wird, der um 2 bis 6 bar höher als der Gasdruck am Oberende dieses Behälters ist.

12. Verfahren nach Anspruch 1, dadurch gekennzeichnet, dass das Material mittels eines Elevators zu dem ersten Behälter transportiert wird.

13. Verfahren nach Anspruch 1 oder 12, dadurch gekennzeichnet, dass das Material vom Boden jedes Behälters zum Oberende des nächsten Behälters mittels eines Schrauben- oder Schneckenförderers und eines Elevators transportiert wird.

14. Verfahren nach irgendeinem der Ansprüche 1 bis 11, dadurch gekennzeichnet, dass

das Material vom Boden jedes Behälters zum Oberende des nachfolgenden Behälters pneumatisch mittels eines Trägergases transportiert wird;

das Trägergas am Oberende jedes Behälters von dem Material abgetrennt wird; und

das vom Oberende eines Behälters abgetrennte Trägergas zum Boden eines Behälters zurückgeführt wird, der in der Reihe von Behältern weiter vorn liegt als der unmittelbar vorangehende Behälter.

15. Verfahren nach Anspruch 14, dadurch gekennzeichnet, dass das vom Oberende wenigstens eines Behälters abgetrennte Trägergas zum Boden des vorletzten vorangehenden Behälters bzw. der vorletzten vorangehenden Behälter in der Reihe geführt wird.

16. Verfahren nach Anspruch 14 oder 15, dadurch gekennzeichnet, dass das Trägergas von dem Material am Oberende jedes Behälters mittels eines Filters und/oder eines Zyklons abgetrennt wird.

**Revendications**

1. Un procédé pour transporter de manière continue une matière en particules d'une zone sous basse pression à une zone sous pression élevée, dans lequel la matière est passée de la zone sous basse pression au sommet du premier d'une série d'au moins deux récipients oblongs verticaux, caractérisé en ce que:

1) la matière est passée sous la forme d'un lit mobile du sommet de chaque récipient au fond de ce récipient par gravité;

2) la matière est transportée du fond de chaque récipient ou sommet du récipient suivant;

3) la pression de gaz au sommet du premier récipient est maintenue relativement basse, tandis que la pression de gaz au sommet de chaque récipient successif est maintenue sensiblement égale à la pression de gaz existant au fond du récipient précédent;

4) au fond de chaque récipient, on applique une pression de gaz supérieure à la pression de gaz au sommet de ce récipient, de manière que la différence de pression entre le fond et le sommet du récipient considéré soit trop petite pour causer une fluidisation de la matière;

5) la forte pression de gaz est appliquée au fond du dernier récipient; et

6) la matière au fond du dernier récipient est déchargé à la zone sous pression élevée.

2. Un procédé selon la revendication 1, caractérisé en ce que la matière est déchargée pneumatiquement du fond du dernier récipient.

3. Un procédé selon la revendication 1 ou 2, caractérisé en ce que la matière dans chaque récipient est soumise à une vibration.

4. Un procédé selon une ou plusieurs des revendications précédentes, caractérisé en ce que la matière est passée au fond de chaque récipient à une vitesse telle que la vitesse à laquelle la matière passe à une certaine section horizontale du récipient soit égale à la vitesse ascendante du gaz par rapport à la matière à cette section.

5. Un procédé selon une ou plusieurs des revendications précédentes, caractérisé en ce que la pression de gaz dans chaque récipient est réglée à l'aide d'un système commun de gaz sous pression.

6. Un procédé selon une ou plusieurs des revendications précédentes, caractérisé en ce que la pression de gaz au sommet du premier récipient est la pression atmosphérique.

7. Un procédé selon une ou plusieurs des revendications précédentes, caractérisé en ce que la matière a une grosseur moyenne de particules de 0,005 à 1,0 mm.

8. Un procédé selon une ou plusieurs des revendications précédentes, caractérisé en ce que la matière est un combustible solide.

9. Un procédé selon la revendication 8, caractérisé en ce que le combustible est transporté sous une pression de 3,5 à 50 bars du dernier récipient à un réacteur de gazéification.

10. Un procédé selon la revendication 8 ou 9, caractérisé en ce qu'on utilise de 2 à 9 récipients.

11. Un procédé selon une ou plusieurs des revendications 8-10, caractérisé en ce qu'au fond de chaque récipient on applique une pression de gaz qui est 2 à 6 fois supérieure à la pression de gaz au sommet de ce récipient.

12. Un procédé selon la revendication 1, caractérisé en ce que la matière est transportée au premier récipient au moyen d'un élévateur.

13. Un procédé selon la revendication 1 ou 12, caractérisé en ce que la matière est transportée du fond de chaque récipient au sommet du récipient suivant au moyen d'un transporteur à vis ou d'un élévateur.

14. Un procédé selon l'une quelconque des revendications 1-11, caractérisé en ce que:

la matière est transportée du fond de chaque récipient au sommet du récipient suivant pneumatiquement au moyen d'un gaz vecteur;

le gaz vecteur est séparé de la matière au sommet de chaque récipient; et

le gaz vecteur séparé provenant du sommet d'un récipient est recyclé au fond d'un récipient antérieur au récipient immédiatement précédent dans la série.

15. Un procédé selon la revendication 14, caractérisé en ce que le gaz vecteur séparé provenant du sommet d'au moins un récipient est recyclé au fond du ou des pénultièmes récipients précédents dans la série.

16. Un procédé selon la revendication 14 ou 15, caractérisé en ce que le gaz vecteur est séparé de la matière au sommet de chaque récipient au moyen d'un filtre et/ou d'un cyclone.

FIG.1

0 118 929

FIG. 2